# EUROPEAN PATENT APPLICATION

(11) **EP 1 313 298 A1**
(43) Date of publication of application: **21.05.2003**
(21) Application number: 02024614.6
(22) Date of filing: 04.11.2002
(51) Int. Cl.: H04M 1/725

(54) **Handheld device having speech-to-text conversion functionality**

(30) Priority: 20.11.2001 US 989823
(71) Applicant: Gateway, Inc., North Sioux City, South Dakota 57049 (US)
(72) Inventor: Nelson, Richard F., Newport Beach, CA 92663 (US)
(74) Representative: Viering, Jentschura & Partner

(57) **Abstract**

A handheld computing device, such as a personal digital assistant (PDA), has speech-to-text functionality. The handheld computing device includes a receiver, such as an integrated cellular modem, capable of receiving voice communications. The voice communications are routed to a speech-to-text processor that converts the voice communications to text. The text is then displayed on the handheld computing device. The handheld computing device also includes a speaker for outputting the voice communications as audible speech to the user. Further, the handheld computing device may include an input/output device for inputting text and/or commands. The handheld computing device may also include a text-to-speech processor that converts such input text to speech for transmission to another party.

## Description

### Field of the Invention

The present invention relates to handheld computing devices, and in particular to, a handheld computing device having speech-to-text conversion functionality.

### Background of the Invention

Wireless communication devices are used in many different environments. Much of the communication is done via audible speech using cellular telephones and personal digital assistants (PDAs) equipped with cellular capabilities. Speech provides the ability to communicate quickly and efficiently. However, in some environments (e.g., industrial plants with very high noise levels, stadiums during sporting events or concerts, airport tarmacs), the ambient noise is too intense to carry on a conversation. Also, people with speech and/or hearing disabilities are unable to use such devices.

In such environments and for people with such disabilities, pagers and PDAs provide the ability to receive text messages, such as email messages or messages representative of telephone calls from others. Such text messages are a slower mode of communication than speech, as most people can talk faster than they can write or type. While voice recognition software is available to translate speech to text on a personal computer, it is inconvenient for people to carry personal computers with them to provide such translation services when calling someone, even if they are calling from a very noisy environment. Also, people with speech and/or hearing disabilities are unable to place calls without the assistance of such computers or other non-portable specialized devices.

### Summary of the Invention

Accordingly, embodiments of the present invention are directed to a handheld computing device, such as a personal digital assistant (PDA), having speech-to-text functionality, which addresses the problems described above. The handheld computing device includes a receiver capable of receiving voice communications. The voice communications are routed to a speech-to-text processor that converts the voice communications to text. The text is then displayed on the handheld computing device. The handheld computing device also includes a speaker for outputting the voice communications as audible speech to the user.

In one embodiment, the receiver may be a cellular modem integrated into the handheld computing device. Also, the speech-to-text processor may include software executed by a microprocessor from a memory. In further embodiments, the handheld computing device may include an I/O device for inputting text and/or commands. The handheld computing device may also include a text-to-speech processor that converts such input text to speech for transmission to another party.

### Brief Description of the Drawings

Figure 1 is a block diagram of a handheld computing device capable of receiving voice communications and having speech-to-text conversion functionality.
Figure 2 is a block diagram of selected functional elements of the handheld computing device of Figure 1.
Figure 3 is a flowchart showing a method of receiving voice communications, converting the voice communications to text, and displaying the text to a user.
Figure 4 is a flowchart showing a method of receiving text input from a user, converting the text to voice communications, and transmitting the voice communications.
Figure 5 is a block diagram of a further embodiment of a handheld computing device capable of receiving and transmitting voice communications and having speech-to-text and text-to-speech conversion functionality.

### Detailed Description of the Invention

In the following description, reference is made to the accompanying drawings which form a part hereof and show, by way of illustration, specific embodiments in which the invention may be practiced. These embodiments are described in sufficient detail to enable those skilled in the art to practice the invention, and it is to be understood that other embodiments may be utilized and that structural, logical and electrical changes may be made without departing from the scope of the present invention. The following description is, therefore, not to be taken in a limited sense, and the scope of the present invention is defined by the appended claims.

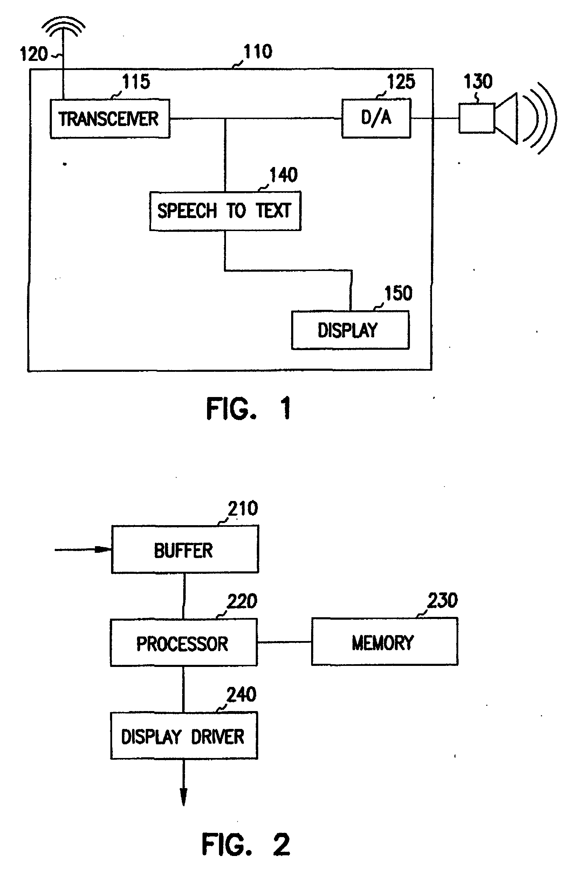

A handheld computing device, such as a personal digital assistant (PDA), is shown generally at 110 in Figure 1. The PDA 110 comprises an integrated cellular modem or transceiver 115 having an antenna 120. Other types of transceivers may also be used if desired, but cellular modems are most prevalently used today. Transceiver 115 receives voice communications such as a telephone call in digital or analog format. In an alternative embodiment, the PDA 110 may be coupled to a cellular telephone (not shown) via a wired or wireless connection (not shown). The cellular telephone may receive the voice communications such as the telephone call in digital or analog format, and then provide the digital or analog signal to the transceiver 115 via the wired or wireless connection.

The transceiver 115 provides a digital voice signal to a digital-to-analog (D/A) converter 125, which converts the digital voice signal to analog sound signals for output on a speaker 130, or to a jack for an external speaker, also represented by 130. The transceiver 115 also provides the digital voice signal to a speech-to-text processor or function 140. Speech-to-text processor 140 converts the digital voice signal to text, which is then formatted via a proxy or other type of module for display on a display device 150. Display device 150 may be an LCD type of device having the capability of displaying one or more lines of text. It may also be any other type of device capable of displaying text.

The PDA 110 further includes an input/output (I/O) device (not shown) for inputting commands and/or text to the PDA 110. For example, the I/O device allows the user to select modes of the PDA 110, such as a text mode in which voice input from a telephone call is converted to text and displayed to the user. It also provides for control of other functions of the PDA 110. The I/O device is coupled to the display 150, which allows the user to view such input commands and/or text. The I/O device may comprise a touch pad for use with or without a stylus, a plurality of keys such as a keypad or function keys, a port for attachment to an external keyboard or other devices, or the like.

Speech-to-text processor 140 is shown in further detail in Figure 2. The digital voice signal is buffered in a buffer 210, which is coupled to a processor 220. Processor 220 executes speech-to-text software stored in a memory 230. Such speech-to-text software is known and available to those skilled in the art. In one embodiment, processor 220 is a microprocessor, and memory 230 is a programmable read only memory, dynamic random access memory, or any other type of memory capable of retaining software for execution by processor 220. In alternative embodiments, the memory 230 may be an external memory or module coupled to the PDA 110 with speech-to-text software thereon for execution by processor 220. In further embodiments, the processor 220 may be a customized integrated circuit chip such as a programmable logic array or other type of device which utilizes read only memory, or may be preprogrammed specifically to accomplish speech-to-text conversion at high speeds. In other embodiments, the buffer 210 may be included in the memory 230.

A display driver 240 is coupled to the processor 220 to receive the converted text. The display driver 240 acts as a proxy to format the text for display 150. The display driver instructions may also be executed by the processor 220 and stored in the memory 230.

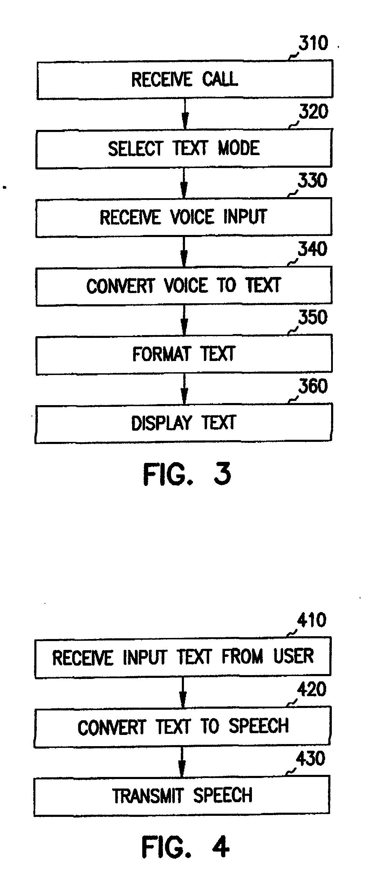

A method of receiving voice communications, converting the voice communications to text, and displaying the text to a user is shown in Figure 3. In step 310, a telephone call is received and addressed to the transceiver. In step 320, the user has the option to select, or previously may have set as a preference, a text mode for the call. Selection of the text mode causes the voice input from the call to be received at step 330, and then converted to text by the speech-to-text converter at step 340. In step 350, the text is formatted for display by the display driver or the processor, and in step 360, the text is displayed to the user on the display. If the text mode is not selected at step 320, the voice input is converted to an audio signal in a known manner by the D/A converter and output to the user by the speaker, and a normal voice telephone call may ensue. Alternatively, if the text mode is selected at step 320, in addition to converting the voice input to text and displaying the text on the display to the user in steps 330-360, the voice input may also be converted to an audio signal and output to the user by the speaker. Thus, the user may receive the telephone call as audible speech on the speaker and as visible text on the display.

Figure 4 is a flowchart showing a method of receiving text input from a user, converting the text input to voice communications, and transmitting the voice communications to another party. Text input from a user is received at step 410. The text may be provided by handwriting recognition or use of a virtual keyboard displayed on a touch pad of the PDA. Further, the PDA may include a plurality of keys such as a keypad or function keys, or be attached via a port to an external keyboard or other device, for quicker entry of text. Still further, the text may be copied from electronic mail and other documents if desired. At step 420, the text is converted to speech by a text-to-speech processor, and at step 430, transmitted via the transceiver to another party. The text-to-speech function may be performed by a processor such as the processor 220 shown in Figure 2 or another processor.

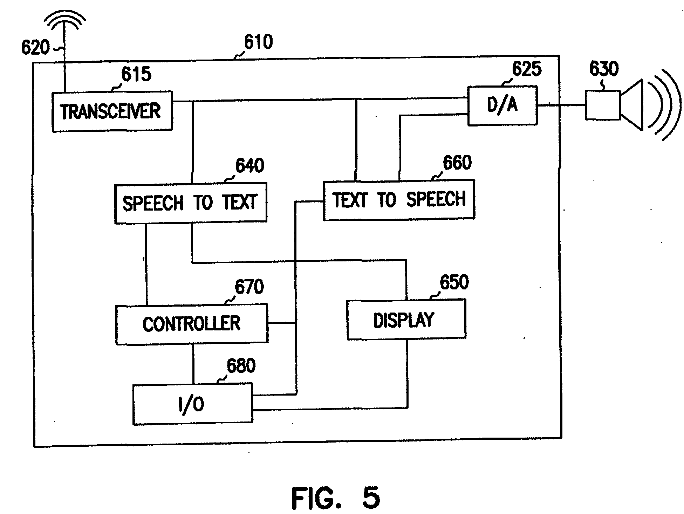

In Figure 5, a block diagram of a further embodiment of a handheld computing device, such as a personal digital assistant (PDA), capable of receiving voice communications and having speech-to-text and text-to-speech conversion functionality is shown generally at 610. The PDA 610 comprises an integrated cellular modem or transceiver 615 having an antenna 620. Other types of transceivers may also be used if desired, but cellular modems are most prevalently used today. Transceiver 615 may be similar to transceiver 115 described above with respect to Figure 1. In an alternative embodiment, the PDA 610 may be coupled to a cellular telephone (not shown) via a wired or wireless connection (not shown). The cellular telephone may receive the voice communications such as the telephone call in digital or analog format, and then provide the digital or analog signal to the transceiver 615 via the wired or wireless connection.

The transceiver 615 provides a digital voice signal to a digital-to-analog (D/A) converter 625, which converts the digital voice signal to analog sound signals for output on a speaker 630, or to a jack for an external speaker, also represented by 630. The transceiver 615 also provides the digital voice signal to a speech-to-text processor or function 640. Speech-to-text processor 640 converts the digital voice signal to text, which is then formatted via a proxy or other type of module for display on a display device 650. Display device 650 may be an LCD type of device having the capability of displaying one or more lines of text. It may also be any other type of device capable of displaying text. Speech-to-text processor 640 may be similar to speech-to-text processor 140 described above with respect to Figure 1.

PDA 610 further comprises a text-to-speech processor or function 660, which converts text input by a user into speech, as described with respect to Figure 4. The text-to-speech processor 660 converts the text input to a digital voice signal, which is then provided to the transceiver 615 for transmission to another party. The text-to-speech processor 660 may also provide the digital voice signal to the D/A converter 625 for output to the user on the speaker 630. Similar to the speech-to-text processor 140 shown in Figure 2, the text-to-speech processor 660 may include a processor which executes software instructions stored in a memory. In one embodiment, the processor may be a microprocessor, and the memory may be a programmable read only memory, dynamic random access memory, or any other type of memory capable of retaining software instructions for execution by processor. In alternative embodiments, the memory may be an external memory or module coupled to the PDA 610 with software instructions thereon for execution by the processor. In further embodiments, the processor may be a customized integrated circuit chip such as a programmable logic array or other type of device which utilizes read only memory, or may be preprogrammed specifically to accomplish text-to-speech conversion at high speeds. The text-to-speech processor 660 may further include a buffer which is coupled to the processor and buffers the digital voice signal provided to the transceiver 615. Alternatively, the buffer may be included in the memory.

The PDA 610 also comprises a controller 670 for coordinating functions within the PDA 610 and an I/O device 480 for inputting commands and/or text to the PDA 610. Both the speech-to-text processor 640 and the text-to-speech processor 660 may be controlled by the controller 670 in response to user input via the I/O device 680. The I/O device 680 allows the user to select modes of the PDA 610, such as a text mode in which voice input from a telephone call is converted to text and displayed to the user, and also in which text input from the user may be converted to speech and transmitted to another party. For example, the PDA 610 allows the user to select to carry on a conversation with another party by providing text to the PDA 610. The I/O device 680 also provides for control of other functions of the PDA 610. The I/O device 680 is coupled to the display 650 so that the user can view such input commands and/or text. The I/O device 680 may comprise a touch pad for use with or without a stylus, a plurality of keys such as a keypad or function keys, a port for attachment to an external keyboard or other devices, or the like.

A handheld computing device, such as a PDA, serves as a telephone with speech-to-text capabilities, or may be coupled to a telephone via a wired or wireless connection and provide speech-to-text capabilities for the telephone. Such capabilities are useful in situations where ambient noise is too great to adequately hear oral conversations, and are also useful for people with speech and/or hearing disabilities. Further embodiments of the invention include the capability of converting text to speech. This is useful for people with speech and/or hearing disabilities, and is also useful in places where quiet is required or even in very loud environments. Such speech-to-text and text-to-speech capabilities may be implemented in software instructions stored either on the handheld computing device or an external memory or module coupled to the handheld computing device. While several embodiments have been described, other configurations may also make use of the methods herein, including handheld television and telephone combinations and other configurations. It is manifestly intended that this invention be limited only by the claims and equivalents thereof.

## Claims

1. A handheld computing device comprising:
a receiver capable of receiving voice communications;
a speaker coupled to the receiver, wherein the speaker is capable of outputting the voice communications as audible speech;
a speech-to-text processor coupled to the receiver, wherein the speech-to-text processor is capable of converting the voice communications to text; and
a display coupled to the speech-to-text processor, wherein the display is capable of displaying the text corresponding to the voice communications.

2. The handheld computing device of claim 1 wherein the receiver is capable of receiving the voice communications in digital and analog formats.

3. The handheld computing device of claim 1 wherein the receiver comprises a cellular modem integrated into the handheld computing device.

4. The handheld computing device of claim 1 wherein the handheld computing device is coupled to a cellular telephone, and the cellular telephone provides the voice communications to the receiver.

5. The handheld computing device of claim 1, wherein the voice communications are in digital format, and further comprising a digital-to-analog converter capable of converting the digital voice communications to analog signals compatible with the speaker.

6. The handheld computing device of claim 1 wherein the speech-to-text processor comprises one of: software capable of being executed by a microprocessor from a memory and an integrated circuit chip.

7. The handheld computing device of claim 1, further comprising an input/output device coupled to the display and capable of receiving input.

8. A handheld computing device comprising:
an input/output device for inputting text;
a transceiver capable of receiving and transmitting voice communications;
a speaker coupled to the transceiver, wherein the speaker is capable of outputting the received voice communications as audible speech;
a speech-to-text processor coupled to the transceiver, wherein the speech-to-text processor is capable of converting the received voice communications to text;
a display coupled to the input/output device and the speech-to-text processor, wherein the display is capable of displaying the input text and the text corresponding to the received voice communications; and
a text-to-speech processor coupled to the input/output device and the transceiver, wherein the text-to-speech processor is capable of converting the input text to speech for transmission by the transceiver.

9. The handheld computing device of claim 8 wherein the transceiver is capable of receiving and transmitting the voice communications in digital and analog formats.

10. The handheld computing device of claim 8 wherein the transceiver comprises a cellular modem integrated into the handheld computing device.

11. The handheld computing device of claim 8 wherein the handheld computing device is coupled to a cellular telephone, and the cellular telephone provides the voice communications to the receiver.

12. The handheld computing device of claim 8, wherein the voice communications are in digital format, and further comprising a digital-to-analog converter capable of converting the digital voice communications to analog signals compatible with the speaker.

13. The handheld computing device of claim 8 wherein the speech-to-text processor comprises one of: software capable of being executed by a microprocessor from a memory and an integrated circuit chip.

14. The handheld computing device of claim 8 wherein the input/output device comprises at least one of: a virtual keyboard displayed on a touch pad, a plurality of keys, and a port for coupling an external device to the handheld computing device.

15. The handheld computing device of claim 8 wherein the handheld computing device comprises a personal digital assistant.

16. A method of communicating comprising:
receiving cellular voice communications in a handheld computing device;
converting the voice communications to text; and
displaying the text on a display screen of the handheld computing device.

17. The method of claim 16, further comprising outputting the voice communications as audible speech on a speaker of the handheld computing device.

18. The method of claim 16 wherein the voice communications are received in digital and analog formats.

19. The method of claim 16, wherein the voice communications are in digital format, and further comprising converting the digital voice communications to analog signals compatible with a speaker of the handheld computing device.

20. A method of communicating comprising:
receiving cellular voice communications in a handheld computing device;
converting the voice communications to text;
displaying the text on a display screen of the handheld computing device;
receiving text communications from a user of the handheld computing device;
converting the text communications to voice signals; and
transmitting the voice signals.
